Europäisches Patentamt

European Patent Office

Office européen des brevets

(11) Publication number: **0 443 208 A2**

# EUROPEAN PATENT APPLICATION

(21) Application number: 90125850.9

(22) Date of filing: 31.12.90

(51) Int. Cl.⁵: **G06F 15/80**

(30) Priority: 20.02.90 JP 39430/90

(43) Date of publication of application:
**28.08.91 Bulletin 91/35**

(84) Designated Contracting States:
**DE FR GB IT**

(71) Applicant: **KABUSHIKI KAISHA WACOM
5-23-4, Sakurada Washimiyamachi
Kitakatsusika-gun, Saitama-ken(JP)**

(72) Inventor: **Akamatsu, Norio
2-105 Josanjima Jyutaku 2-9-2
Nakajosanjima-cho
Tokushima-shi, Tokushima-ken(JP)**
Inventor: **Murakami, Azuma
c/o K.K. Wacom. 5-23-4 Sakurada,
Washimiyamachi
Kitakatsusika-Gun, Saitama-ken(JP)**
Inventor: **Yamane, Ryuichi
c/o K.K.Wacom, 5-23-4 Sakurada,
Washimiyamachi
Kitakatsusika-Gun, Saitama-ken(JP)**
Inventor: **Fukuzaki, Yasuhiro
c/o K.K.Wacom, 5-23-4 Sakurada,
Washimiyamachi
Kitakatsusika-Gun, Saitama-ken(JP)**
Inventor: **Yamamoto, Sadao
c/o K. K. Wacom, 5-23-4, Sakurada,
Washimiyamachi
Kitakatsusika-Gun, Saitama-ken(JP)**

(74) Representative: **TER MEER - MÜLLER -
STEINMEISTER & PARTNER
Mauerkircherstrasse 45
W-8000 München 80(DE)**

(54) **Inductively coupled neural network.**

(57) A neural coupling is composed of a pair of primary and secondary members (13,14) for coupling a precedent node (10) to a subsequent node (11) to synaptically transmit a signal through a neural network. A primary member is receptive of a signal from a precedent node for generating an inductive field according to the received signal. A secondary member is spatially coupled to the primary member through the inductive field for producing to a subsequent node a corresponding signal in response to the inductive field so as to effect synaptic transmission of the signal through the neural network.

FIG. 1

# INDUCTIVELY COUPLED NEURAL NETWORK

The present invention relates to a neural network and neural coupling of neurons which constitute the neural network.

Conventionally, a specific type of the computer has been proposed and is comprised of a neural network which operates in a mode similar to information processing in the human brain.

This type of device is directed to process mathematically random matter such as pattern recognition and associative memorization, which could not be processed well by the Neumann type computer of sequential processing mode.

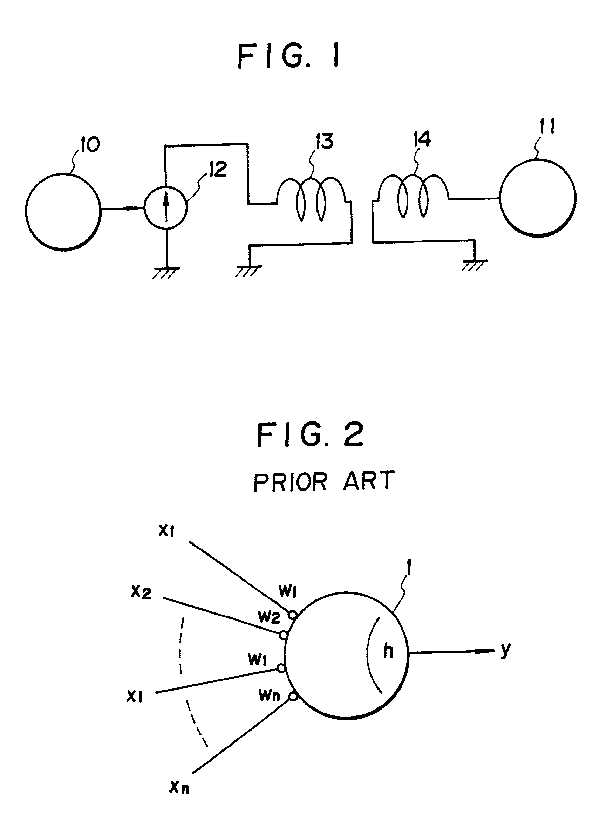

Fig. 2 shows a neuron which is an elementary unit of the neural network. The neuron 1 operates such that it receives n number of input signals $x_1$, $x_2$, ... $x_i$, ... $x_n$ to multiply each of synaptic coupling weights $w_1$, $w_2$, ... $w_i$, ... $w_n$ with each corresponding one of the input signals and to then calculate the sum of the multiplication results. The neuron 1 further operates to add a specific threshold value h to the sum and then to pass the added result through a nonlinear function to thereby output an output signal y. Such operation is mathematically represented by the following relation:

$$y = f\left(\Sigma_1 \, w_i x_i + h\right) \qquad (1)$$

In the operation, if the synaptic coupling weight $w_i$ is positive, it provides an excitatory synaptic coupling, while if the synaptic coupling weight $w_i$ is negative, it provides an inhibitatory synaptic coupling. When simulating the neuron in a mathematical form, the nonlinear function is normally represented by the following sigmoid function:

$$f(x) = 1/\{1 + \exp(-x)\} \qquad (2)$$

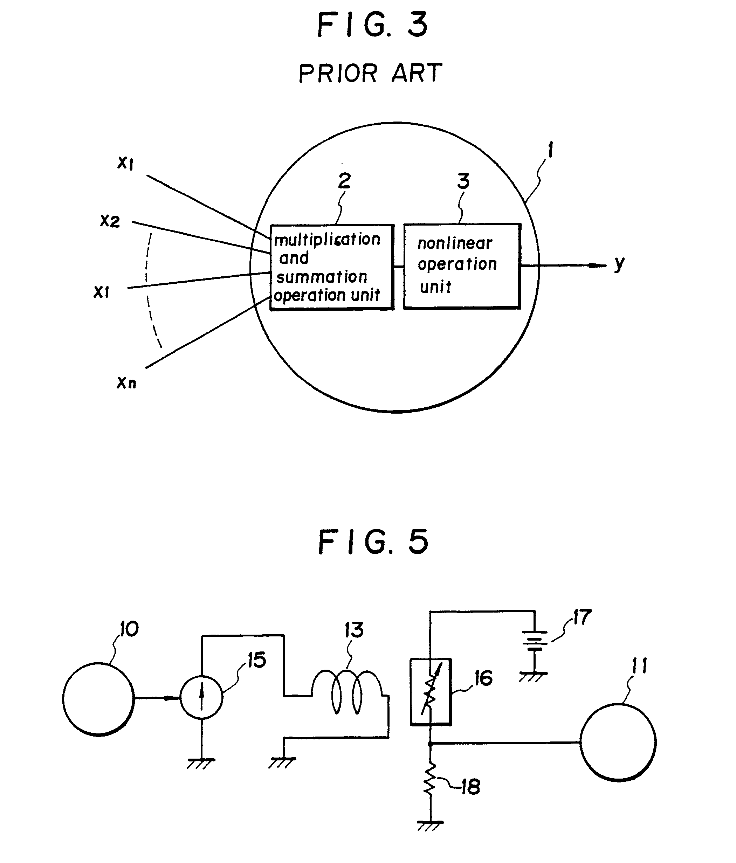

Fig. 3 is a block diagram showing performance of the neuron.
The neuron is comprised of a multiplication and summation unit 2 for multiplying synaptic coupling weights $w_i$ with the corresponding input signals $x_i$ and obtaining the sum of the multiplication results, and nonlinearly operating unit 3 for adding a specific threshold value to the sum and nonlinearly processing the added result. The value of the synaptic coupling weight $w_i$ is determined according to an adaptive learning function unit (not shown) based on back-propagation method or else.

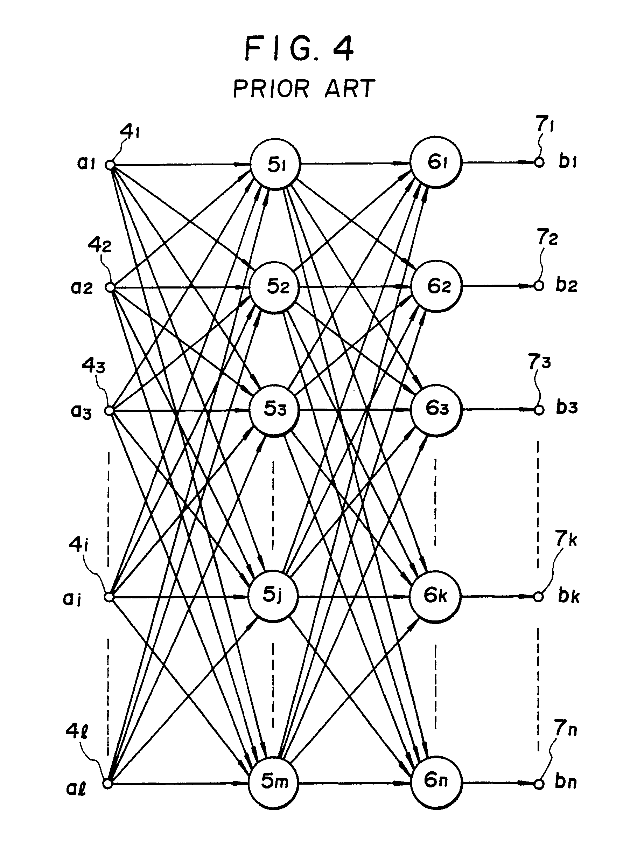

Fig. 4 shows an example of the neural network. In the figure, the neural network is comprised of input terminals $4_1$, $4_2$, ... $4_i$, ... $4_\ell$, primary neurons $5_1$, $5_2$, ... $5_j$, ... $5_m$, secondary neurons $6_1$, $6_2$, ... $6_k$, ... $6_n$, and output terminals $7_1$, $7_2$, ... $7_k$, ... $7_n$. The input terminals $4_1$, $4_2$, ... $4_i$, ... $4_\ell$ receive each of $\ell$ number of input signals $a_1$, $a_2$, ... $a_i$, ... $a_\ell$. These input signals are distributed to and inputted into m number of the neurons $5_1$, $5_2$, ... $5_j$, ... $5_m$. Each of the neurons $5_1$, $5_2$, ... $5_j$, ... $5_m$ carries out the before-mentioned multiplication and summation operation and nonlinear processing. Further, output signals of the primary neurons $5_1$, $5_2$, ... $5_j$, ... $5_m$ are distributed to and inputted into respective one of n number of the secondary neurons $6_1$, $6_2$, ... $6_k$, ... $6_n$. Each of the neurons $6_1$, $6_2$, ... $6_k$, ... $6_n$ also carries out the before-mentioned multiplication and summation operation and the subsequent nonlinear processing, such that respective output signals $b_1$, $b_2$, ... $b_k$, ... $b_n$ are outputted from n number of the output terminals $7_1$, $7_2$, ... $7_k$, ... $7_n$. Value of the synaptic coupling weights of respective neurons $5_1$ - $5_m$ and $6_1$ - $6_n$ is determined according to a controlling learning function unit (not shown). Namely, the neural network is inputted with a set of input signals $a_1$ - $a_\ell$, the processed results of which are known as a set of output signals $b_1$ - $b_n$. A current set of output signals is compared with the known output signals so as to determine the value of the synaptic coupling weights by the learning function unit through the back-propagation method. By repeating such procedure for appropriate times, the final synaptic coupling weights are adaptively adjusted to produce optimum output signals when the input signals $a_1$ - $a_\ell$ are inputted to the neural network.

As described above, according to adaptive learning by the learning function unit, the neural network can organize itself so as to obtain correct output signals $b_1$ - $b_n$ from input signals $a_1$ - $a_\ell$. Therefore, the neural network does not need any specific algorithm and program for processing the signals. Moreover, the neural network can process a multiple of data concurrently in parallel so as to treat mathematically random matter such as pattern recognition and associative memorization at high speed.

The performance of the neural network depends on number of neurons, and the more effective the more the number of neurons. However, when increasing the number of neurons, number of couplings also increases correspondingly between the input terminals and the neurons and between the neurons with each other. Generally, when the number of neurons is multiplied by n-times, the number of couplings should be increased in the order of $n^2$ - times.

The currently available integrated circuit technology is only aplicable to a two-dimensional substrate, and the number of multi-layered patterns is limited to a certain degree. Therefore, in order to construct a neural network as shown in Fig. 4 in the form of an integrated circuit, a number of available neurons is considerably restricted, thereby causing a problem. There has been experimentally produced various types of the neural networks. For example, patterns are formed to constitute couplings between input terminals and neurous and among the neurous, and the patterns are commonly used in the time-sharing mode for the plurality of input terminals and neurous so as to reduce an actual number of neural couplings. In another example of the conventional neural network, photoemitting element, photodetecting element, optical fiber and spatial photomodulator can be used to enable spatial couplings effective to transmit optical signals between input terminals and neurons and among neurons. Coupling weights can be also optically set in the neural network.

However, in the former type of the prior art, perfect parallel processing cannot be carried out. In the latter type of the prior art, presently available optical technology is not so sophisticated as to enable reduction of the device size, and it would be difficult to continuously change coupling weight according to the learning results. Either of the prior art structures may cause drawbacks to impair essential features of the neural network.

In view of the above noted drawbacks of the prior art, an object of the present invention is to provide neural couplings in the neural network for coupling in parallel the input terminals and the neurous with each other and the neurous with one another with using readily available fabrication technology and without causing scale-up of the device.

In order to achieve the above noted object, according to the first aspect of the present invention, there is provided the neural coupling method for coupling an input terminal and a neuron with each other and coupling a pair of neurons with each other through magnetic field, electric field or electromagnetic field. According to the second aspect, the neural network comprises input terminals, neurons, and a coupling device or circuit for coupling an input terminal and a neuron with each other and coupling a pair of neurons with each other through magnetic field, electric field or electromagnetic field. According to the third aspect, the coupling device comprises at least a pair of inductance elements magnetically coupled to each other through the magnetic field. According to the fourth aspect, the inductance element comprises a coil. According to the fifth aspect, the inductance element comprises a magnetoresistance element. According to the sixth aspect, the coupling device comprises at least one capacitor for effecting the coupling through electric field. According to the seventh aspect, the coupling circuit comprises at least a resonance circuit for effecting the coupling through electromagnetic field. According to the eighth aspect, a neural network comprises a plurality of input terminals, a plurality of primary neurons each having an output, a secondary neuron having an input, a plurality of primary coils magnetically coupled to one another and each being connected to each of the input terminals or each output of the primary neurons, and a secondary coil magnetically coupled to the primary coils and being connected to the input of the secondary neuron. According to the ninth aspect, the neural network comprises a plurality of input terminals, a plurality of primary neurons each having an output, a multiple of primary coils each being connected to each of the input terminals or each output of the primary neurons, a multiple of secondary coils each being magnetically coupled to a set of the primary coils each selected from different groups of the primary coils corresponding to respective input terminals or respective outputs of the primary neurons, and a multiple of secondary neurons each having an input connected to each of the secondary coils. According to the tenth aspect, the neural network includes a plurality of resonance circuits containing the corresponding coils. According to the eleventh aspect, the neural network includes a plurality of impedance elements each being connected in parallel or series to a corresponding coil to define a synaptic coupling weight. According to the twelfth aspect, each impedance element has a impedance variable to adjust the synaptic coupling weight.

With regard to the first aspect of the present invention, since the input terminal and the neuron or the pair of neurons are coupled through magnetic field, electric field or electromagnetic field, a multiple of the input terminals and the neurons or a multiple of the neurons can be spatially coupled by readily available technology to achieve overall parallel coupling with each other.

With regard to the second aspect, since a coupling device or circuit is utilized to couple between an input terminal and a neuron or between a pair of neurons through the magnetic or electric field, a maltiple of the input terminals and neurons and a multiple of the neurons can be spatially coupled with each other by mature technology so as to provide a neural network having parallel couplings.

With regard to the third aspect, at least a pair of magnetically coupled inductance elements are used as a coupling device through magnetic field so as to facilitate circuit design of the neural network.

With regard to the fourth aspect, since the inductance element is composed of a coil, couplings can be constructed economically with less spacing between input terminals and neurons and among the neurons.

With regard to the fifth aspect, since a magnetoresistance element is used as the inductance element, the coupling can be effected through DC magnetic field as well as AC magnetic field.

With regard to the sixth aspect, since at least one capaciter is used as the coupling device through electric field, circuit design can be facilitated. Further, couplings can be constructed at low cost with less spacing between input terminals and neurons and among neurons, and the coupling can be effected through DC electric field as well as AC electric field.

With regard to the seventh aspect, since at least one resonance circuit is used as the coupling circuit through magnetic field, couplings can be constructed efficiently and spatially between input terminals and neurons and among neurons.

With regard to the eighth aspect, the neural network is comprised of a plurality of input terminals, a plurality of primary neurons each having an output, a secondary neuron having an input, a plurality of primary coils magnetically coupled to each other and each being connected to each of the input terminals or each output of the primary neurons, and a secondary coil magnetically coupled to the primary coils and being connected to the input of the secondary neuron, hence the parallel couplings can be constructed between the plural input terminals and the secondary neuron and between the plural primary neurons and the secondary neuron.

With regard to the ninth aspect, the neural network is comprised of a plurality of input terminals, a plurality of primary neurons each having an output, a multiple of primary coils each being connected to each of the input terminals or each output of the primary neurons, a multiple of secondary coils each being magnetically coupled to a set of the primary coils each selected from different groups of the primary coils corresponding to respective input terminals or respective outputs of the primary neurons, and a multiple of secondary neurons each having an input connected to each of the secondary coils; hence the parallel couplings can be constructed between the plural input terminals or the plural primary neurons and the multiple secondary neurons.

With regard to the tenth aspect, since the whole or part of the coils are incorporated into a resonance circuit, the couplings can be constructed efficiently in parallel between the plural input terminals or the plural primary neurons and the single or multiple secondary neuron.

With regard to the eleventh aspect, since an impedance element is connected in series or parallel to the coil or resonance circuit so as to define the synaptic coupling weights, the couplings can be ensured between the plural input terminals or the plural primary neurons and the single or multiple secondary neuron to enable the secondary neuron to effect multiplication and summation operation.

With regard to the twelfth aspect, since the synaptic coupling weight can be adjusted by changing impedance of the impedance element, the multiplication and summation operation can be controllably carried out in the single or multiple neurons.

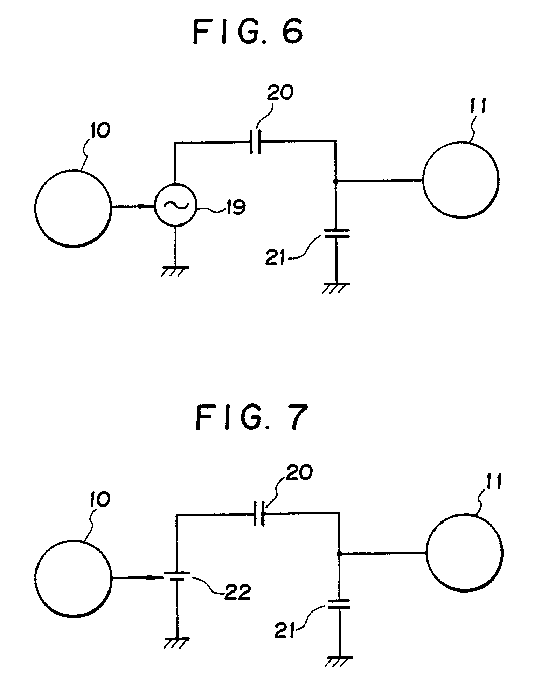

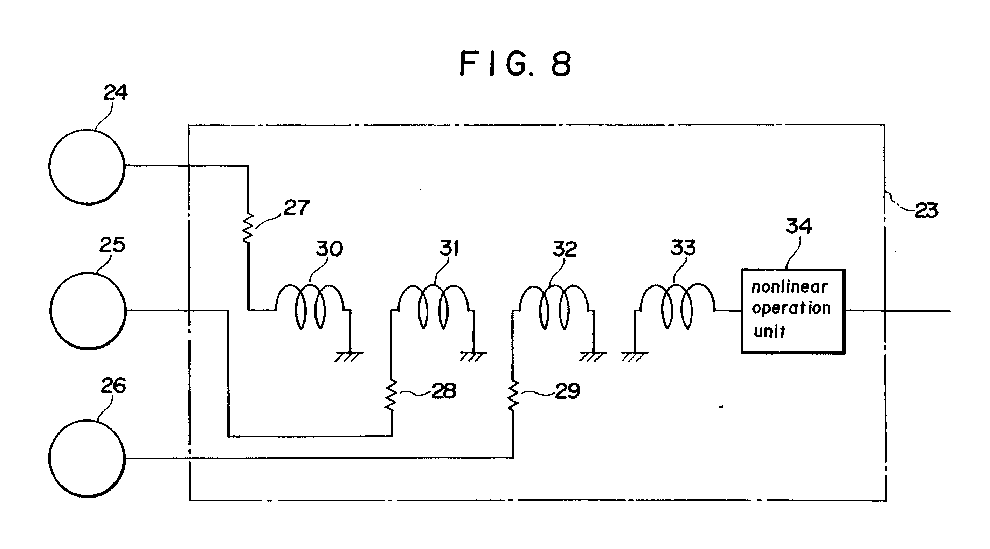

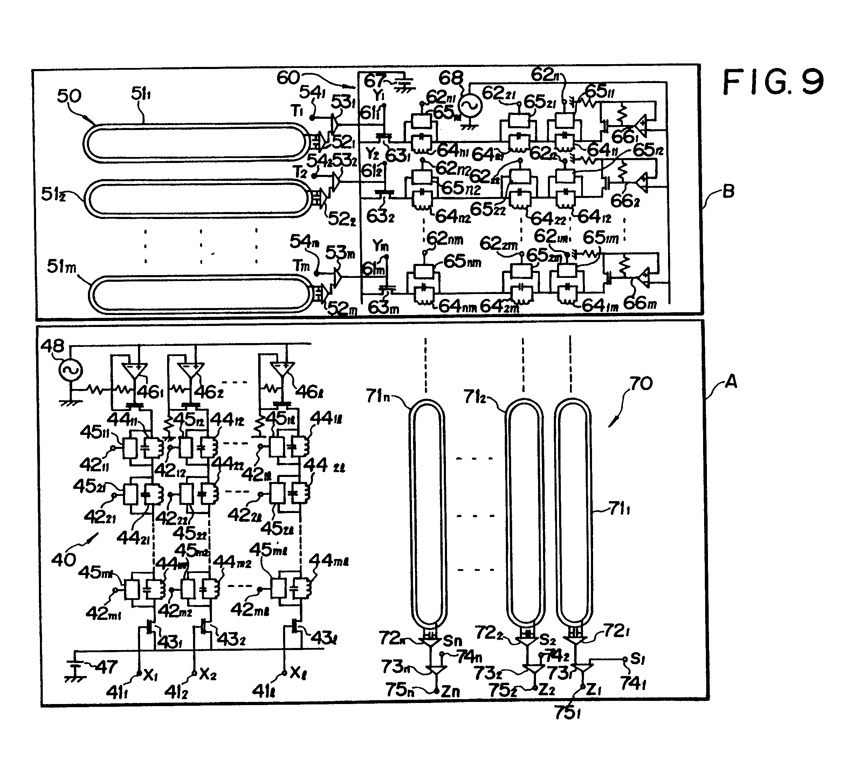

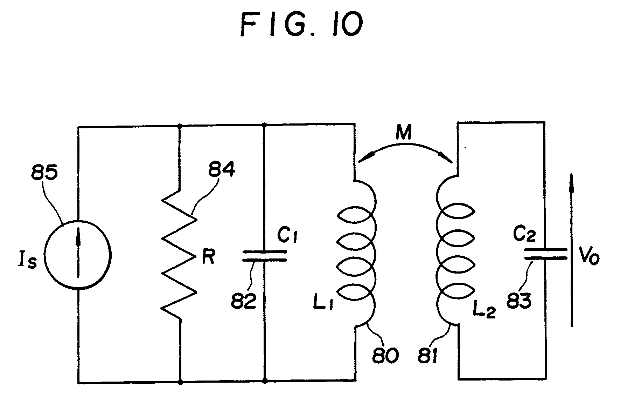

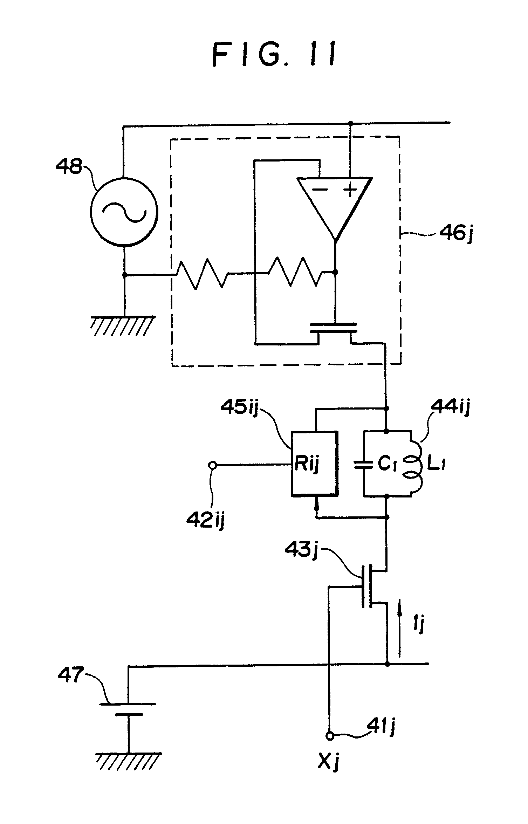

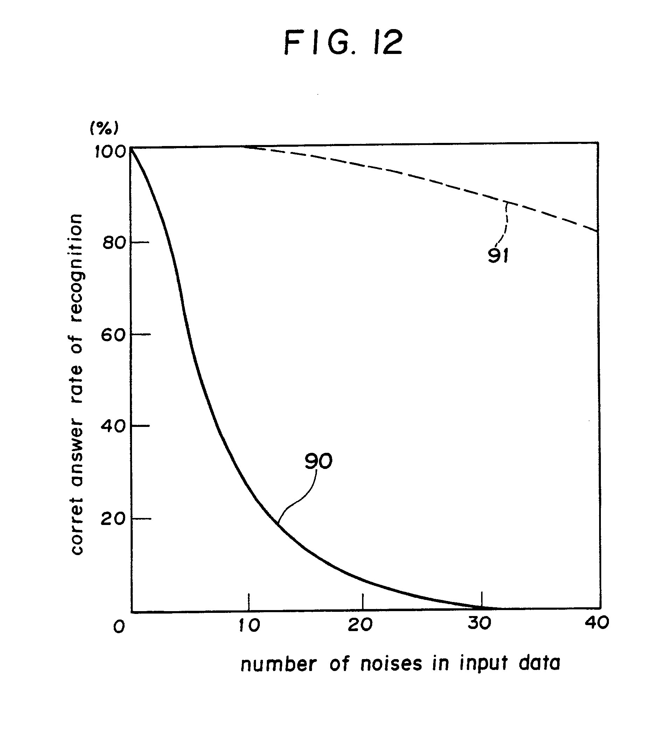

Fig. 1 is a circuit diagram showing a first embodiment of the present invention; Fig. 2 is an illustrative diagram showing a neuron which constitutes a neural network; Fig. 3 is a block diagram showing function of the neuron; Fig. 4 is a diagram showing an example of the neural network; Fig. 5 is a circuit diagram showing a second embodiment of the invention; Fig. 6 is a circuit diagram showing a third embodiment of the invention; Fig. 7 is a circuit diagram showing a fourth embodiment of the invention; Fig. 8 is a circuit diagram showing a fifth embodiment of the invention; Fig. 9 is a circuit diagram showing a sixth embodiment of the invention; Fig. 10 is an explanatory diagram showing operation of an electromagnetically coupled circuit; Fig. 11 is an explanatory diagram showing the operation of the Fig. 9 circuit; and Fig. 12 is a graph showing the relation between number of noises contained in input data and correct answer rate in the recognition.

Fig. 1 shows a first embodiment of the present invention, in which a pair of nodal neurons 10 and 11 are coupled to each other through inductive AC magnetic field with using an alternating current source 12 and coils 13 and 14. An output current of the alternating current source 12 is controlled by an output signal of the precedent nodal neuron 10. The coils 13 and 14 are connected, respectively, to the alternating current source 12 and to an input of the subsequent nodal neuron 11, and they are arranged to magnetically couple with each other. In such structure, the alternating current cource 12 feeds an alternating current to the coil 13 according to an output value of the neuron 10 to generate an inductive AC magnetic field in the coil 13. The AC magnetic field is effective to generate in the coil 14 an induced voltage proportional to the output value of the neuron 10, and the induced voltage is inputted into the neuron 11.

Fig. 5 shows a second embodiment of the present invention in the form of a neural coupling through inductive DC magnetic field. As shown in the figure, the neural coupling is comprised of a pair of neurons 10 and 11, a coil 13, a direct current source 15, a magnetoresistance element 16, a constant voltage source 17 and a resistor 18.

An output current of the direct current source 15 is controlled by an output signal of the precedent neuron 10. The coil 13 is connected to the direct current source. The magnetoresistance element 16 is connected at its one end to the constant voltage source 17, and connected at its other end to the ground through the resistor 18 and to an input of the subsequent neuron 11. The coil 13 and the magnetoresistance element 16 are arranged to magnetically couple with each other.

In the above described construction, the direct current source 15 feeds a direct current according to an output value of the neuron 10 to the coil 13 to generate therein a DC magnetic field. The DC magnetic field is effective to change resistance value of the magnetic resistance element 16 proportionally to the output value of the neuron 10. The change of the resistance value causes corresponding change of an electric current flowing from the constant voltage source 17 through the magnetic resistance element 16 to the resistor 18. A voltage drop developed across the resistor 18 due to the flowing electric current is inputted into the neuron 11 so that the neuron 11 receives a voltage having a magnitude proportional to the output value of the neuron 10.

Fig. 6 shows a third embodiment of the present invention in the form of neural coupling through inductive AC electric field. As shown in the figure, the neural coupling is comprised of a pair of neurons 10 and 11, an AC voltage source 19 and capacitors 20, 21. The AC voltage source 19 is controlled by an output signal of the neuron 10. The capacitor 20 is connected at its one electrode to the AC voltage source 19, and is connected at its other electrode to an input of the neuron 11 and to one terminal of the capacitor 21. The other terminal of the capacitor 21 is connected to the ground. In such construction, the AC voltage source 19 applies an AC voltage according to the output value of the neuron 10 to one electrode of the capacitor 20 to generate therein an AC electric field. The AC electric field is effective to induce at the other electrode of the capacitor 20 a voltage proportional to the output value of the neuron 10, and the induced voltage is inputted into the neuron 11.

Fig. 7 shows a fourth embodiment of the present invention in the form of neural coupling through a DC electric field. In the figure, the neural coupling is comprised of a pair of neurons 10 and 11, capacitors 20, 21 and a DC voltage source 22. The DC voltage source 22 is controlled by an output signal of the neuron 10. The capacitor 20 is connected at its one electrode to the DC voltage source 22, and is connected at its other electrode to an input of the neuron 11 and to one terminal of the capacitor 21. The other terminal of the capacitor 21 is connected to the ground. In such construction, the DC voltage source 22 applies a DC voltage according to the output value of the neuron 10 to the one electrode of the capacitor 20 to generate therein a DC electric field. The DC electric field induces at the other electrode of the capacitor 20 a voltage proportional to the output value of the neuron 10. The induced voltage is inputted into the neuron 11.

Fig. 8 shows a fifth embodiment of the present invention in the form of neural coupling utilizing AC magnetic field and designed to carry out concurrently multiplication and summation operation. In the figure, the neural coupling is comprised of neurons 23, 24, 25 and 26, resistors 27, 28 and 29, coils 30, 31, 32 and 33 and a nonlinear operating unit 34. The subsequent neuron 23 is comprised of the resistors 27, 28 and 29, the coils 30, 31, 32 and 33, the nonlinear operating unit 34 and a learning function unit (not shown). The resistors 27, 28 and 29 constitute synaptic coupling weights together with the coils 30, 31, 32 and 33, and their resistance values are determined by the learning function unit. One terminal of the respective resistors 27, 28 and 29 is connected to a corresponding output terminal of the respective precedent neurons 24, 25 and 26, and the other terminal of the respective resistors 27, 28 and 29 is connected to corresponding one of the coils 30, 31 and 32. The coil 33 is connected to the nonlinear operating unit 34. The coils 30, 31, 32 and 33 are arranged to couple magnetically in series with each other. The neurons output, respectively, an AC voltage signal.

In the above described construction, the respective coils 30, 31 and 32 pass therethrough an alternating current depending on the output voltage values of the neurons 24, 25 and 26, the resistance values of the resistors 27, 28 and 29 and reactances of the coils 30, 31, 32 and 33 so as to generate DC magnetic fields. These DC magnetic fields are combined with each other to induce in the coil 33 a voltage proportional to the output values of the coils 24, 25 and 26 and proportional to the synaptic coupling weights determined by the resistors 27, 28 and 29 and the coils 30, 31, 32 and 33. The induced voltage is inputted into the nonlinear operating unit 34 and is nonlinearly processed. In this embodiment, coils are utilized for the generation and detection of the AC magnetic field; however, other elements can be used. Any impedance element can be used in place of a resistor for constituting synaptic coupling weight. Further, the synaptic coupling can be based on induction through DC magnetic field, AC electric field or DC electric field so as to concurrently effect the multiplication and summation operation in manner similar to the fifth embodiment.

Fig. 9 shows a sixth embodiment of the present invention in the form of neural network through electromagnetic field coupling effective to carry out concurrently multiplication and summation operation. In the figure, the neural network is comprised of input nodes or terminals $41_1$, $41_2$, ... $41_\ell$ arranged in one row, synaptic coupling weight control terminals $42_{11}$, $42_{12}$, ... $42_{1\ell}$, $42_{21}$, $42_{22}$, ... $42_{2\ell}$, ... $42_{m1}$, $42_{m2}$, ... $42_{m\ell}$ arranged in m rows and $\ell$ columns, transistors (FETs) $43_1$, $43_2$, ... $43_\ell$ arranged in one row, resonance circuits $44_{11}$, $44_{12}$, ... $44_{1\ell}$, $44_{21}$, $44_{22}$, ... $44_{2\ell}$, ... $44_{m1}$, $44_{m2}$, ... $44_{m\ell}$ arranged in an array of m rows and $\ell$ columns and each being composed of a coil and a capacitor, impedance elements $45_{11}$, $45_{12}$, ... $45_{1\ell}$, $45_{21}$, $45_{22}$, ... $45_{2\ell}$, ... $45_{m1}$, $45_{m2}$, ... $45_{m\ell}$ arranged in m rows and $\ell$ columns, constant current circuits $46_1$, $46_2$, ... $46_\ell$ arranged in one row and each being composed of an operational amplifyer, a transistor and a resistor, a direct current source 47, and an alternating current source 48.

These elements constitute a first block 40.

A second block 50 is comprised of m parallel rows of linear resonance circuits $51_1$, $51_2$, ... $51_m$, each circuit being composed of a coil and a capacitor, a column of differential amplifyers $52_1$, $52_2$, ... $52_m$, a column of comparators $53_1$, $53_2$ ... $53_m$, and a column of threshold value input terminals $54_1$, $54_2$, ... $54_m$.

A third block 60 is comprised of a column of intermediate output nodes or terminals $61_1$, $61_2$, ... $61_m$, m rows and n columns of synaptic coupling weight control terminals $62_{11}$, $62_{12}$, ... $62_{1m}$, $62_{21}$, $62_{22}$, ... $62_{2m}$, ... $62_{n1}$, $62_{n2}$, ... $62_{nm}$, a column of transistors (FETs) $63_1$, $63_2$, ... $63_m$, an array of m rows and n columns of resonance circuits $64_{11}$, $64_{12}$, ... $64_{1m}$, $64_{21}$, $64_{22}$, ... $64_{2m}$, ... $64_{n1}$, $64_{n2}$, ... $64_{nm}$, each being composed of a coil and a capacitor, m rows and n columns of impedance elements $65_{11}$, $65_{12}$, ... $65_{1m}$, $65_{21}$, $65_{22}$, ... $65_{2m}$, ... $65_{n1}$, $65_{n2}$, ... $65_{nm}$, a column of constant current circuits $66_1$, $66_2$, ... $66_m$, each being composed of an operational amplifyer, a transistor and a resistor, a direct current source 67, and an alternating current source 68.

A fourth block 70 is comprised of n parallel columns of linear resonance circuits $71_1$, $71_2$, ... $71_n$, each composed of a coil and a capacitor, a row of differential amplifyers $72_1$, $72_2$, ... $72_n$, a row of comparators $73_1$, $73_2$, ... $73_n$, a row of threshold value input terminals $74_1$, $74_2$, ... $74_n$, and a row of output nodes or terminals $75_1$, $75_2$, ... $75_n$.

The first block 40 and the fourth block 70 are formed integrally on a planar substrate A as shown in the figure, and the second block 50 and the third block 60 are formed integrally on a planar substrate B as shown in the figure. The pair of substrates A and B are superposed with each other to constitute the neural network such that the first block 40 and the second block 50 face to each other, and the third block 60 and the fourth block 70 face to each other. In such arrangement, electromagnetic coupling is formed between the first block 40 and the second block 50 such that the first row of resonance circuits $44_{11}$, $44_{12}$, ... $44_{1\ell}$ corresponds to the first row of resonance circuit $51_1$, the second row of resonance circuits $44_{21}$, $44_{22}$, ... $44_{2\ell}$ corresponds to the second row of resonance circuit $51_2$, and the m-th row of resonance circuits $44_{m1}$, $44_{m2}$, ... $44_{m\ell}$ corresponds to the m-th row of resonance circuit $51_m$. In similar manner, with regard to the third block 60 and the fourth block 70, the electromagnetic coupling is formed between the first column of resonance circuits $64_{11}$, $64_{12}$, ... $64_{1m}$ and the first column of resonance circuit $71_1$, between the second column of resonance circuits $64_{21}$, $64_{22}$, ... $64_{2m}$ and the second column of resonance circuit $71_2$, and between the n-th column of resonance circuits $64_{n1}$, $64_{n2}$, ... $64_{nm}$ and the n-th column of resonance circuit $71_n$.

Next, the description is given for flow or transmission of signals. $\ell$ number of input signals $X_1$, $X_2$, ... $X_\ell$ are inputted, respectively, in parallel into the row of input terminals $41_1$, $41_2$, ... $41_\ell$ of the first block 40, and are then distributed through the row of corresponding transistors $43_1$, $43_2$, ... $43_\ell$ to the corresponding columns of resonance circuits $44_{11}$, $44_{21}$, ... $44_{m1}$. $/44_{12}$, $44_{22}$, ... $44_{m2}/$ ... $/44_{1\ell}$, $44_{2\ell}$, ... $44_{m\ell}$. Then, the distributed set of the input signals $X_1$, $X_2$, ... $X_\ell$ is transmitted in the form of electromagnetic wave from the respective rows of the resonance circuits $44_{11}$, $44_{12}$, ... $44_{1\ell}$ / $44_{21}$, $44_{22}$, ... $44_{2\ell}$ / ... $/44_{m1}$, $44_{m2}$, ... $44_{m\ell}$ to the corresponding rows of the resonance circuits $51_1$, $51_2$, ... $51_m$ through the electromagnetic coupling therebetween, and consequently the set of the input signals $X_1$, $X_2$, ... $X_\ell$ are added to each other in the respective resonance circuit $51_1$, $51_2$, ... $51_m$.

Each of the resonance circuits $44_{11}$ - $44_{m\ell}$ is connected in parallel to each of the impedance elements $45_{11}$ - $45_{m\ell}$. Therefore, the set of input signals $X_1$, $X_2$, ... $X_\ell$ are added to each other through each row of couplings according to the respective synaptic coupling weights determined according to the impedance value of the elements $45_{11}$ - $45_{m\ell}$ and the impedance of the resonance circuits $44_{11}$ - $44_{m\ell}$ and the impedance of the resonance circuits $51_1$ - $51_m$. The synaptic coupling weights are adaptively adjusted by setting impedances of the impedance elements $45_{11}$ - $45_{m\ell}$ by means of a learning function unit (not shown) connected thereto through the synaptic coupling weight controlling terminals $42_{11}$ - $42_{m\ell}$.

Output signals from the resonance circuits $51_1$, $51_2$, ... $51_m$ are amplified, respectively, by the column of differential amplifyers $52_1$, $52_2$, ... $52_m$,

and then compared by the column of comparators $53_1$, $53_2$, ... $53_m$ with the respective threshold values $T_1$, $T_2$, ... $T_m$ which are inputted separately from the threshold value input terminals $54_1$, $54_2$, ... $54_m$ so as to produce m number of intermediate output signals $Y_1$, $Y_2$, ... $Y_m$. The set of intermediate output signals $Y_1$, $Y_2$, ... $Y_m$ are outputted, respectively, externally through the column of intermediate output terminals $61_1$, $61_2$, ... $61_m$ of the third block 60, and are also distributed through the column of transistors $63_1$, $63_2$, ... $63_m$ to the respective rows of resonance circuits $64_{11}$, $64_{21}$, ... $64_{n1}$ / $64_{12}$, $64_{22}$, ... $64_{n2}$ / ... / $64_{1m}$, $64_{2m}$, ... $64_{nm}$. Then, the set of distributed intermediate output signals are transmitted from the respective columns of resonance circuits $64_{11}$, $64_{12}$, ... $64_{1m}$ / $64_{21}$, $64_{22}$, ... $64_{2m}$ / ... / $64_{n1}$, $64_{n2}$, ... $64_{nm}$ to the corresponding columns of resonating circuits $71_1$, $72_2$, ... $71_n$ of the fourth block 70, which are electromagnetically coupled to the corresponding columns of resonance circuits $64_{11}$, $64_{12}$, ... $64_{1m}$ / $64_{21}$, $64_{22}$, ... $64_{2m}$ / ... / $64_{n1}$, $64_{n2}$, ... $64_{nm}$. The set of transmitted signals are added in each of the resonance circuits $71_1$, $71_2$, ... $71_n$. Each of the impedance elements $65_{11}$ - $65_{nm}$ is connected in parallel to each of the corresponding resonance circuits $64_{11}$ - $64_{nm}$ so that the set of intermediate output signals are added to each other with the synaptic coupling weights which are determined by impedances of the impedance elements $65_{11}$ - $65_{nm}$, the resonance circuits $64_{11}$ - $64_{nm}$ and the resonance circuits $71_1$ - $71_n$. The synaptic coupling weights can be adaptively adjusted by setting impedance values of the impedance elements $65_{11}$ - $65_{nm}$ through the corresponding synaptic coupling weight control terminals $62_{11}$ - $62_{nm}$ by the learning function unit (not shown).

Output signals of the columns of the resonance circuits $71_1$, $71_2$, ... $71_n$ are amplified by the respective differential amplifyers $72_1$, $72_2$, ... $72_n$, and further compared by the respective comparators $73_1$, $73_2$, ... $73_n$ with respective threshold values $S_1$, $S_2$, ... $S_n$ which are inputted separately from threshold value input terminals $74_1$, $74_2$, ... $74_n$ to thereby finally develop at n number of the output terminals $75_1$, $75_2$, ... $75_n$.

Next, the general description is given for the operation of the electromagnetically coupled resonance circuits with reference to Fig. 10. The electromagnetic coupling is comprised of coils 80, 81, capacitors 82, 83, a resistor 84 and an alternating current source 85. A primary resonance circuit is comprised of the coil 80 and the capacitor 82, and the resistor 84 and alternating current source 85 are connected in parallel to the primary resonance circuit. A secondary resonance circuit is comprised of the coil 81 and the capacitor 83. Here, $L_1$ and $L_2$ denote inductances of the coils 80 and 81, respec-

tively, $C_1$ and $C_2$ denote capacitances of the capacitors 82 and 83, respectively, R denotes resistance of the resistor 84, and $I_s = I_0 \sin \omega t$ denotes an output current of the alternating current source 85. The primary resonance circuit is held in the resonant state to satisfy the following relation:

$$\omega L_1 = 1/\omega C_1 \qquad (3)$$

On the other hand, an induced voltage is generated in the secondary resonance circuit due to mutual induction between the coils 80 and 81. The voltage $V_0$ developed across the terminals of the capacitor 83 is represented by the following relation:

$$V_0 = MRI_s / [\{L_1(1-\omega^2(C_2L_2) + \omega^2C_2M^2\} + j\omega^3RC_1C_2M^2] \qquad (4)$$

where M denotes mutual inductance between the coils 80 and 81 and is represented by $M^2 = K^2L_1L_2$ where K indicates coupling coefficient.

According to the relation (4), the voltage $V_0$ induced in the secondary resonance circuit is proportional to the product of the current $I_s$ in the primary resonance circuit and the resistance R. Therefore, by changing the value of resitance R, the voltage $V_0$ can be varied. Change of the value of the resistance R is to change selectivity of the resonance circuit.

Next, the description is given for the operation of the Fig. 9 neural network with reference to Fig. 11 which examplifies one circuit section of the first block 40. The circuit section is comprised of an input terminal $41_j$, a synaptic coupling weight control terminal $42_{ij}$, a transistor $43_j$ (FET), a resonance circuit $44_{ij}$, an impedance element $45_{ij}$, a constant current circuit $46_j$ composed of an operational amplifyer, a transistor and resistors, a direct current source 47, and an alternating current source 48 (where j = 1, 2, ... $\ell$, i = 1, 2, ... m). The input terminal $41_j$ receives an input signal voltage $X_j$ which may have either of high and low levels. When the input voltage $X_j$ exceeds a threshold value of the transistor $43_j$, a current $I_j$ is flown throughout the j-th column of resonance circuits $44_{ij}$ (i = 1, ... m). The current $I_L$ flowing in the coil of the resonance circuit $44_{ij}$ is represented by the following relation:

$$I_L = (1 - \omega^2C_2L_2)R_{ij}I_j / [-\omega^4R_{ij}C_1C_2M^2 + j \{\omega L_1(1-\omega^2C_2L_2) + \omega^3C_2M^2\}] \qquad (5)$$

where $L_1$ denotes inductance of the coil of the resonance circuit $44_{ij}$, $L_2$ denotes inductance of the coil of the corresponding resonance circuit $51_i$ (not shown) of the second block 50, which corresponds to the resonance circuit $44_{ij}$, M denotes mutual inductance therebetween, $C_1$ and $C_2$ denote

capacitances of the capacitors in the resonance circuits $44_{ij}$ and $51_i$, respectively, and $R_{ij}$ denotes impedance of the impedance element $45_{ij}$. The resonance circuit $44_{ij}$ of the first block 40 transmits electromagnetic wave proportional to the current $I_L$ flowing through the coil. As understood from the relation (5), the current $I_L$ is proportional to $R_{ij}I_j$. As decribed before, the i-th row of the resonance circuits $44_{ij}$ (j = 1, 2, ... ℓ) of the first block 40 are electromagnetically coupled to the i-th linear resonance circuit $51_i$ of the second block 50 so that the i-th resonance circuit $51_i$ of the second block 50 induces a voltage proportional to sum of the currents flowing through the respective coils of the resonance circuits $44_{ij}$ (j = 1, 2, ... ℓ) of the first block 40.

In the second block 50, the induced voltage is amplified by the i-th differential amplifyer $52_i$, and thereafter is detected by the i-th comparator $53_i$. Therefore, the output signal voltage $Y_i$ of the i-th comparator $53_i$ is represented by the following relation:

$$Y_i = \alpha\Sigma R_{ij}I_j \quad (6)$$

where $\alpha$ denotes proportional constant. According to the relation (6), the output signal voltage $Y_i$ of the second block 50 is obtained through the multiplication and summation operation in the form of matrix/vector products of impedance $R_{ij}$ and current $I_j$.

Further, similar operation is effected between the respective resonance circuits of the third block 60 and the corresponding resonance circuit of the fourth block 70. The output signal voltage $Z_{k(k = 1, 2, ... n)}$ is likewise obtained through the multiplication and summation operation in the form of matrix/vector products of the impedance $Q_{ki}$ of the impedance element $65_{ki}$ and the current $I_i$.

The impedances $R_{ij}$ and $Q_{ki}$ are controlled, respectively, through the synaptic coupling weight control terminals $42_{ij}$ and $62_{ki}$ by the learning function unit. In the embodiment, the impedances $R_{ij}$ and $Q_{ki}$ are of purely resistive value so that the selectivity is changed in the resonance circuits $44_{ij}$ and $64_{ki}$ by the learning operation. Accordingly, the phase of the transmitted electromagnetic wave is not changed, and therefore it is not necessary to compensate for any phase difference.

Further, the currents $I_j$ and $I_i$ are controlled, respectively, by the input voltage $X_j$ of the transistor $43_j$ and the intermediate input voltage $Y_i$ of the transistor $63_i$, hence the currents $I_j$ and $I_i$ are, respectively, function of the input voltages $X_j$ and $Y_i$, i.e., $I_j = f(X_j)$ and $I_i = f(Y_i)$. This function is determined by the characteristics of the transistors $43_j$ and $63_i$. In the later-described simulation, the function is approximated by sigmoid type. In the foregoing description, the voltages $X_j$, $Y_i$ and $Z_k$ are actually values before the processing by nonlinear function such as sigmoid function.

Though not shown in Figs. 9 and 11, for providing the positive and negative synaptic coupling weights in the practical device, the resonance circuits $44_{ij}$ and $64_{ki}$ are added with other resonance circuits having a reversely wound coil and a corresponding impedance element and another synaptic coupling weight control terminal.

The impedance elements $45_{ij}$ and $65_{ki}$ may be composed, for example, of MOS-FET. Namely, a MOS-FET is connected at its source and drain terminals in parallel to the individual resonance circuit, and its gate terminal is connected to the synaptic coupling weight control terminal. The synaptic coupling weight control terminal is supplied with a gate voltage controlled by the learning function unit so that the channel resistance between the source and drain terminals is adaptively set to determine optimum synaptic coupling weight.

In other way, the synaptic coupling weight may be adjusted by using a voltage-controlled variable capacitor which is generally utilized in an electronic synchronization circuit. Namely, the resonance circuits $44_{ij}$ and $64_{ki}$ can be comprised of a variable capacitor, and the capacitance thereof can be controlled by a voltage inputted from the learning function unit to set its value. Concurrently, the current flowing through the resonance circuits $44_{ij}$ and $64_{ki}$ is varied to thereby change the magnitude of voltage induced in the corresponding secondary resonance circuits $51_i$ and $71_k$.

The constant current circuit $46_j$ and $66_i$ drive, respectively, the j-th column of the resonance circuits of the first block 40 and i-th row of the resonance circuits of the third block 60 by constant current basis, so that the currents $I_j$ and $I_i$ are not affected by the change of the above-mentioned impedances.

Lastly, simulation is undertaken for evaluating the performance of the Fig. 9 neural network. Namely, the first block 40 has 81 number of the input terminals, the second block 50 has 20 number of output terminals which correspond to those of the intermediate output terminals of the third block 60, and the fourth block 70 has 26 number of the final output terminals. The input voltage $X_j$ is set to ±5V, the inductance of the coils of the resonance circuits is set to 10 nH in the first block 40 and the third unit 60, the capacitance of the capacitors of these resonant circuits is set to 2.533 pF, the frequency of the power source is set to $1GH_z$, and the resonance circuits are held in the resonant state. A limiter is utilized for the impedance elements such that the impedance $R_{ij}$ has value in the range of 0-1 K Ω for positive and negative input values. Consequently, if the adjust-

ing value of impedance $R_{ij}$ according to the learning exceeds 1 K Ω, the impedance $R_{ij}$ is actually limited to 1 K Ω. The amplitude change of the currents $I_j$, $I_i$ fed from the constant current circuits is set in the range of 0-10 mA. Inductance of coils of the secondary resonance circuits is set to 20nH in the second block 50 and the fourth block 70, and capacitance of capacitors of the secondary resonance circuits is set to 2.533 pF. Lastly, the coupling coefficient K is set to 0.1 between the coils of the primary resonance circuits in the first and third blocks 40, 60 and the corresponding coils of the secondary resonance circuits in the second and fourth blocks 50, 70. The learning is carried out according to learning rule of back-propagation. Under the above-mentioned condition, 277 times of learning trials are undertaken until saturation to establish stable recognition of 26 capital letters of alphabets. Further, Fig. 12 shows the relation between number of noises in the input data and correct answer rate of the recognition. In the graph, the solid curve 90 indicates the results when the number of input data is set to 8x8 = 64, and the broken curve 91 indicates the results when the number of input data is set to 40x40 = 1600.

In order to practice the invention, the neural network can be constructed in the form of an integrated circuit which contains coils and capacitors. In such case, spiral coils can be formed of gold plating film on the integrated circuit substrate, and capacitors having capacitance of 1-20 pF can be formed of dielectric material film such as silicon nitride $Si_3N_4$ on the integrated circuit of the planar type. Further, an integrated circuit utilizing FETs of gallium arsenide can be used in the high frequency range more than 40 $GH_z$. By increasing the operating frequency, inductances and capacitances can be reduced in the resonance circuits to thereby enable the production of practical neural network by the currently available fabrication technology. In the present invention, analog signals are transmitted through magnetic, electric or electromagnetic field coupling with using coils and capacitors. Variation may be caused in circuit parameters such as inductance of coils and capacitance of capacitors during the fabrication processing. However, such circuit parameter variation can be effectively canceled during the learning procedure, because the synaptic coupling weights are adaptively determined through the learning performance to obtain optimum results in the neural network to thereby absorb the above-noted variation.

As described above, according to the first aspect of the present invention, since the input terminal and the neuron or the pair of neurons are coupled through magnetic field, electric field or electromagnetic field, a multiple of the input terminals and the neurons or a multiple of the neurons themselves can be spatially coupled by the mature technology to achieve overall parallel coupling with each other.

According to the second aspect, since a coupling device or circuit is utilized to couple between an input terminal and a neuron or between a pair of neurons through the magnetic or electric field, a multiple of the input terminals and neurons and a multiple of the neurons themselves can be spatially coupled with each other by the mature technology so as to provide a neural network having parallel couplings.

According to the third aspect, at least a pair of magnetically coupled inductance elements are used as a coupling device through magnetic field so as to facilitate circuit design of the neural network, and to realize practical neural network.

According to the fourth aspect, since the inductance element is composed of a coil, couplings can be constructed economically with less spacing between input terminals and neurons and among the neurons.

According to the fifth aspect, since a magnetic resistance element is used as the inductance element, the coupling can be effected through DC magnetic field as well as AC magnetic field, thereby increasing design freedom.

According to the sixth aspect, since at least one capacitor is used as the coupling device through electric field, circuit design can be facilitated. Further, couplings can be constructed at low cost with less spacing between input terminals and neurons and among neurons, and the coupling can be effected through DC electric field as well as AC electric field, thereby increasing design freedom.

According to the seventh aspect, since at least one resonance circuit is used as the coupling circuit through magnetic field, couplings can be constructed efficiently and spatially between input terminals and neurons and among neurons.

According to the eighth aspect, the neural network is comprised of a plurality of input terminals, a plurality of primary neurons each having an output, a secondary neuron having an input, a plurality of primary coils magnetically coupled to each other and each being connected to each of the input terminals or each output of the primary neurons, and a secondary coil magnetically coupled to the primary coils and being connected to the input of the secondary neuron; hence the parallel couplings can be constructed between the plural input terminals and the secondary neuron and between the plural primary neurons and the secondary neuron, thereby reducing overall size of the neural network.

According to the ninth aspect, the neural network is comprised of a plurality of input terminals, a plurality of primary neurons each having an output, a multiple of primary coils each being connected to each of the input terminals or each output of the primary neurons, a multiple of secondary coils each being magnetically coupled to a set of the primary coils each selected from different groups of the primary coils corresponding to respective input terminals or respective outputs of the primary neurons, and a multiple of secondary neurons each having an input connected to each of the secondary coils; hence the parallel couplings can be constructed between the plural input terminals or the plural primary neurons and the multiple secondary neurons, thereby enabling further reduction of the overall size of the neural network circuit.

According to the tenth aspect, since the whole or part of the coils are incorporated into a resonance circuit, the couplings can be constructed efficiently in parallel between the plural input terminals or the plural primary neurons and the single or multiple secondary neuron.

According to the eleventh aspect, since an impedance element is connected in series or parallel to the coil or resonance circuit so as to define the synaptic coupling weights, the couplings can be ensured between the plural input terminals or the plural primary neurons and the single or multiple secondary neuron to enable the secondary neuron to effect multiplication and summation operation. Consequently, there is realized a neural network having a smaller size and a greater number of neurons.

According to the twelfth aspect, since the synaptic coupling weight can be adjusted by changing impedance of the impedance element, the multiplication and summation operation can be controllably carried out in the single or multiple neurons. Consequently, there can be realized an efficient neural network having a smaller size and a greater number of neurons.

## Claims

1. A neural coupling method of coupling an input terminal and a neuron with each other and/or coupling a pair of neurons with each other through magnetic field, electric field or electromagnetic field.

2. A neural network comprising: input terminals; neurons; and a coupling device or circuit for coupling an input terminal and a neuron with each other and/or coupling a pair of neurons with each other through magnetic field, electric field or electromagnetic field.

3. A neural network according to claim 2; wherein the coupling device comprises at least a pair of inductance elements (13,14; 16) magnetically coupled to each other through the magnetic field.

4. A neural network according to claim 3; wherein the inductance element comprises a coil (13,14).

5. A neural network according to claim 3; wherein the inductance element comprises a magnetoresistance element (16).

6. A neural network according to claim 2; wherein the coupling device comprises at least one capacitor (20) for effecting the coupling through electric field.

7. A neural network according to claim 2; wherein the coupling circuit comprises at least a resonance circuit (80,82; 81,83) for effecting the coupling through electromagnetic field.

8. A neural network comprising: a plurality of input terminals; a plurality of primary neurons (24,25,26) each having an output; a secondary neuron (23) having an input; a plurality of primary coils (30,31,32) magnetically coupled to each other and each being connected to each of the input terminals or to each output of the primary neurons; and a secondary coin (33) magnetically coupled to the primary coils and being connected to the input of the secondary neuron.

9. A neural network comprising: a plurality of input terminals

$$(41_1 \ldots 41_\ell);$$

a a plurality of primary neurons $(53_1 \ldots 53_m)$ each having an output; a multiple of primary coils each being connected to each of the input terminals or to each output of the primary neurons; a multiple of secondary coils $(51_1 \ldots 51_m; 71_1 \ldots 71_n)$ each being magnetically coupled to a set of the primary coils each selected from different groups of the primary coils corresponding to respective input terminals or respective outputs of the primary neurons; and a multiple of secondary neurons $(73_1 \ldots 73_n)$ each having an input connected to each of the secondary coils.

10. A neural network according to claim 8 or 9; including a plurality of resonance circuits

$$(44_{11} \ldots 44_{m\ell}; \ 64_{11} \ldots 64_{nm})$$

containing the corresponding coils.

11. A neural network according to claim 8 or 9; including a plurality of impedance elements

$$(45_{11} \dots 45_{m\ell}; \, 65_{11} \dots 65_{nm})$$

each being connected in parallel or series to a corresponding coil to define a synaptic coupling weight.

12. A neural network according to claim 11; wherein each impedance element has an impedance variable to adjust synaptic coupling weight.

13. A neural coupling for coupling a precedent node (10) to a subsequent node (11) to synaptically transmit a signal through a neural network, comprising: primary means (13; 19,20; 22; 30,31,32; 40,60; 80,82) receptive of a signal from a precedent node for generating an inductive field according to the received signal; and secondary means (14; 16; 20,21; 33; 50,70; 81,83) spatially coupled to the primary means through the inductive field for producing to a subsequent node a corresponding signal in response to the inductive field so as to effect synaptic transmission of the signal through the neural network.

14. A neural coupling according to claim 13; wherein the primary means includes a primary element electrically connected to a precedent node for generating an inductive field, and the secondary means includes a secondary element inductively coupled to the primary element and electrically connected to a subsequent node.

15. A neural coupling according to claim 14; wherein the primary means includes a multiple of primary elements (30,31,32) each connected to respective one of a multiple of precedent nodes (24,25,26), and the secondary means includes a single secondary element (33) inductively coupled commonly to the multiple of the primary elements.

16. A neural coupling according to claim 14; wherein the primary means includes an array (40) of primary elements

$$(44_{11} \dots 44_{\ell m})$$

arranged in rows and columns, each column of the primary elements being electrically connected to respective one of a plurality of precedent nodes

$$(41_1 \dots 41_\ell),$$

and wherein the secondary means includes a plurality of linear secondary elements ($51_1 \dots 51_m$) arranged in parallel rows, each linear secondary element being inductively coupled to each corresponding row of the primary elements and being electrically connected to respective one of a plurality of subsequent nodes ($61_1 \dots 61_m$).

17. A neural coupling according to claim 16; including a primary planar substrate (A) formed integrally thereon with an array (40) of primary elements, and a secondary planar substrate (B) formed integrally thereon with a plurality of linear and parallel secondary elements ($51_1 \dots 51_m$) and being opposed to the primary planar substrate such that the linear and parallel secondary elements are aligned with the array of primary elements to constitute the inductive coupling therebetween.

18. A neural coupling according to claim 14; wherein the primary element comprises a magnetic inductance element (13) for generating an inductive magnetic field.

19. A neural coupling according to claim 18; wherein the magnetic inductance element comprises a coil.

20. A neural coupling according to claim 18; wherein the secondary element comprises a coil (14) responsive to the inductive magnetic field.

21. A neural coupling according to claim 18; wherein the secondary element comprises a magnetoresistance element (16) responsive to the inductive magnetic field.

22. A neural coupling according to claim 14; wherein the primary element comprises a primary resonance circuit (80,82) for generating an inductive electromagnetic field, and the secondary element comprises a secondary resonance circuit (81,83) inductively coupled to the primary resonance circuit through the electromagnetic field.

23. A neural coupling according to claim 14; wherein the primary element includes one electrode and the secondary element includes another electrode (20) capacitively coupled to said one electrode through an inductive electric field.

24. A neural coupling according to claim 13; including adaptive means (84) for adaptively adjusting a synaptic coupling weight effective to control a magnitude of the inductive field so as to effect the synaptic transmission of the signal.

25. A neural coupling according to claim 24; wherein the primary means includes a resonance circuit (80,82) for generating an inductive electromagnetic field, and the adaptive means includes a variable impedance element (84) electrically connected to the resonance circuit for controlling a magnitude of the inductive electromagnetic field according to its impedance value which determines the synaptic coupling weight.

# FIG. 1

# FIG. 2

## PRIOR ART

# F I G. 3

## PRIOR ART

$X_1$

$X_2$

$X_1$

$X_n$

multiplication and summation operation unit — 2

nonlinear operation unit — 3

1

y

# F I G. 5

10  15  13  17  16  11  18

# F I G. 4
## PRIOR ART

# F I G. 6

# F I G. 7

# F I G. 8

EP 0 443 208 A2

FIG. 9

# F I G. 10

# F I G. 11

# FIG. 12